# EUROPÄISCHE PATENTSCHRIFT

(11) **EP 1 600 255 B1**
(45) Veröffentlichungstag und Bekanntmachung des Hinweises auf die Patenterteilung: **11.07.2007**
(21) Anmeldenummer: 05010398.5
(22) Anmeldetag: 12.05.2005
(51) Int. Cl.: B23Q 11/00, B23B 47/34

(54) **Absaugeinrichtung für Elektrohandwerkzeuggerät**
Chip sucking device for power tool
Dispositif d'aspiration de poussières ou débris pour un outil manuel électrique

(30) Priorität: 27.05.2004 DE 102004026038
(43) Veröffentlichungstag der Anmeldung: 30.11.2005
(73) Patentinhaber: Metabowerke GmbH, 72622 Nürtingen (DE)
(72) Erfinder: Cagan, Joachim, 72654 Neckartenzlingen (DE); Erkan, Dilaver, 72631 Aichtal-Grötzingen (DE); Gantke, Reinhard, 72663 Grossbettlingen (DE); Nothacker, Helmut, 72585 Riederich (DE)
(74) Vertreter: Friz, Oliver

(56) Entgegenhaltungen:
- DE-A1- 3 734 127
- DE-A1- 10 104 782
- FR-A- 2 763 528

## Beschreibung

Die Erfindung betrifft eine Absaugeinrichtung für ein Elektrohandwerkzeuggerät, mit einer gegen eine zu bearbeitende Oberfläche im Bereich einer Werkzeugansetzstelle anlegbaren Staubableitvorrichtung, die einen die Werkzeugansetzstelle mit einer Gehäusewandung umgebenden Ansaugraum aufweist.

Eine derartige Absaugeinrichtung ist beispielsweise aus EP 1 245 330 A2 bekannt. Ein Werkzeug, insbesondere ein Bohrer, eines Elektrohandwerkzeuggeräts erstreckt sich durch den Ansaugraum der Staubableitvorrichtung der Absaugeinrichtung hindurch. Die Staubableitvorrichtung liegt mit einer im Wesentlichen ebenen Anlagefläche gegen die zu bearbeitende Oberfläche an. Durch Unterdruckbeaufschlagung der Staubableitvorrichtung durch eine Unterdruck erzeugende Vorrichtung in Form eines Sauggebläses wird ein Saugluftstrom erzeugt, der Bohrstaub von der Werkzeugansetzstelle im Bereich des Ansaugraums in Richtung auf die Unterdruck erzeugende Vorrichtung zu einem Staubsammelbehälter stromabwärts in der Absaugeinrichtung transportiert.

Auch aus EP 0 434 295 A2 ist eine gattungsgemäße Absaugeinrichtung bekannt, die eine Unterdruck erzeugende elektromotorisch angetriebene Vorrichtung in Form eines Sauggebläses umfasst und bei der ein Staubsammelbeutel abstromseitig anschließbar ist. Auch diese Vorrichtung liegt mit einer ebenen Anlagefläche gegen die zu bearbeitende Oberfläche an.

Eine weitere gattungsgemäße Absaugeinrichtung ist in der nicht vorveröffentlichten DE 103 19 597.1 der Anmelderin beschrieben. Diese Absaugeinrichtung umfasst keine Unterdruck erzeugende Vorrichtung, sondern die Absaugeinrichtung ist über einen Saugschlauch an eine externe Unterdruck erzeugende Vorrichtung, beispielsweise einen Staubsauger anschließbar. Von der vorliegenden Erfindung sind sowohl Absaugeinrichtungen mit integrierter Unterdruck erzeugender Einrichtung als auch solche, die über Leitungsmittel im weitesten Sinne mit einer solchen Unterdruck erzeugenden Vorrichtung verbindbar sind, erfasst.

Auch aus DE 101 04 782 A1 ist eine gattungsgemäße Absaugeinrichtung bei einem Handwerkzeuggerät bekannt. Sie umfasst eine telekopierbare Federbandspirale als Staubableitvorrichtung, die stirnseitig eine Buchse trägt, mit der die Staubableitvorrichtung über in axialer Längsrichtung erstreckte Vorsprünge gegen eine zu bearbeitende Oberfläche anlegbar ist.

Der vorliegenden Erfindung liegt die Aufgabe zugrunde, die Lufteinströmung in die Staubableitvorrichtung dahingehend zu optimieren, dass im Zuge der Bearbeitung anfallender Staub, insbesondere Bohrstaub, effektiv, d. h. so vollständig wie möglich, von der Werkzeugansetzstelle wegtransportiert wird.

Diese Aufgabe wird bei einer Absaugeinrichtung der genannten Art erfindungsgemäß dadurch gelöst, dass die Gehäusewandung eine Außenwandung und eine Innenwandung aufweist, zwischen denen ein spaltförmiger Zwischenraum ausgebildet ist, und dass die Außenwandung über in axialer Richtung erstreckte Vorsprünge gegen die zu bearbeitende Oberfläche anlegbar ist, und dass eine Stirnseite der Innenwandung gegenüber einer Stirnseite der Vorsprünge zurückgesetzt ist.

Es wurde erfindungsgemäß erkannt, dass ein optimaler Staubtransport dann erreicht werden kann, wenn der Großteil der angesaugten Luft zwischen der zu bearbeitenden Oberfläche und der Staubableitvorrichtung in den Ansaugraum eintritt, und zwar um die Werkzeugansetzstelle herum so gleichmäßig wie möglich. Dies wird durch die erfindungsgemäße Ausbildung der Absaugeinrichtung erreicht. Es stellt sich ein Luftstrom ein, der zwischen den Vorsprüngen in der Außenwandung hindurch nach innen auf die Werkzeugansetzstelle zuströmt. Durch den Zwischenraum zwischen der Außenwandung und der Innenwandung, die gegenüber der Stirnseite der Vorsprünge geringfügig zurückgesetzt ist, wird eine Vergleichmäßigung des Saugluftstroms erreicht, was sich im Hinblick auf eine vollständige Staubmitnahme als vorteilhaft erweist.

In Weiterbildung der Erfindung könnten die an der Außenwandung angeordneten Vorsprünge in an sich beliebiger Weise angeformt sein. Es erweist sich indessen als vorteilhaft, wenn die Vorsprünge dadurch gebildet sind, dass an der Stirnseite der Außenwandung in Umfangsrichtung erstreckte Ausnehmungen vorgesehen sind. Die alternierend angebrachten Ausnehmungen haben eine Erstreckung parallel zur Ebene der zu bearbeitenden Oberfläche, also parallel zur Anlageebene der Staubableitvorrichtung von einigen Millimetern, also insbesondere 1 bis 15, weiter insbesondere 2 bis 10 und weiter insbesondere 2 bis 8 mm Länge. Die zwischen ihnen verbleibenden Vorsprünge haben vorzugsweise eine demgegenüber etwas geringere Erstreckung, von insbesondere 1 bis 12, insbesondere 1 bis 10 mm Länge.

Es erweist sich als vorteilhaft, wenn die Innenwandung um eine Entfernung zurückgesetzt ist, die geringer ist als die axiale Erstreckung der Vorsprünge bzw. geringer ist als die axiale Erstreckung der zwischen den Vorsprüngen gebildeten Einströmöffnung.

In weiterer Optimierung der Erfindung erweist es sich als vorteilhaft, dass die Innenwandung derart geringfügig zurückgesetzt ist, dass die von außen nach innen betrachtete Querschnittsfläche des Spalts zwischen Innenwandung und zu bearbeitender Oberfläche geringer ist als die von außen nach innen betrachtete lichte Querschnittsfläche der Einströmöffnung zwischen den Vorsprüngen. Es hat sich nämlich gezeigt, dass solchenfalls der Zwischenraum zwischen Außenwandung und Innenwandung optimal zur Vergleichmäßigung der in Richtung auf die Werkzeugansetzstelle in den Ansaugraum einströmenden Luft dient.

Es hat sich des Weiteren als zweckmäßig erwiesen, wenn die Gehäusewandung, welche den Ansaugraum begrenzt, zylindrisch ist.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der erfindungsgemäßen Absaugeinrichtung. In der Zeichnung zeigt:
- Figur 1: eine perspektivische Ansicht einer erfindungsgemäßen Absaugeinrichtung;
- Figur 2: eine perspektivische Ansicht der Absaugeinrichtung nach Figur 1 in Kombination mit einem weiteren Modul, welches einen Staubsammelbehälter bildet und eines weiteren Moduls, welches eine Unterdruck erzeugende Vorrichtung umfasst;
- Figur 3: eine perspektivische Ansicht eines Teils der Staubableitvorrichtung der Absaugeinrichtung nach Figur 1 und
- Figur 4: ein Detail der Figur 3.

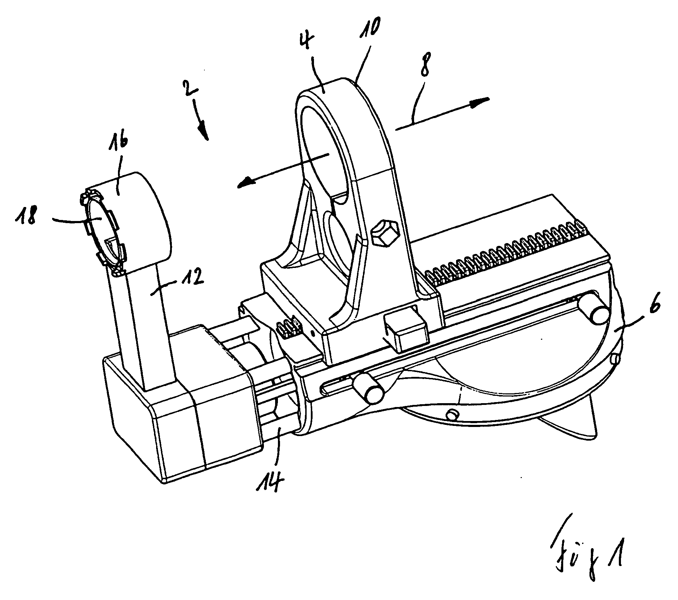

Figur 1 zeigt eine insgesamt mit dem Bezugszeichen 2 bezeichnete Absaugeinrichtung für ein nicht dargestelltes Elektrohandwerkzeuggerät. Die Absaugeinrichtung 2 ist über eine Befestigungsvorrichtung 4 mit dem Elektrohandwerkzeuggerät, insbesondere mit einer Bohrmaschine, verbindbar. Hierfür lässt sich die Befestigungsvorrichtung 4 an in einer Längsrichtung 8 variierender Stelle am Gehäusekörper 6 fixieren. Die Befestigungsvorrichtung 4 umfasst im dargestellten Fall einen Klemmkragen 10, der um einen Hals des nicht dargestellten Elektrohandwerkzeuggeräts herum klemmbar ist.

Die Absaugeinrichtung 2 umfasst des Weiteren eine Staubableitvorrichtung 12, die in der Längsrichtung 8 gegenüber dem Gehäusekörper 6 über im weitesten Sinne teleskopierbare Führungsmittel 14 verschieblich ist. Im an ein Elektrohandwerkzeuggerät montierten Zustand erstreckt sich ein Werkzeug des Elektrohandwerkzeuggeräts, insbesondere ein Bohrer, in der Längsrichtung 8 durch die Staubableitvorrichtung 12, und zwar durch einen von einer Gehäusewandung 16 umgebenen bzw. gebildeten Ansaugraum 18 hindurch. Bei der Bearbeitung liegt die Staubableitvorrichtung 12 gegen die zu bearbeitende Oberfläche an, wobei der Ansaugraum 18 im Bereich der Werkzeugansetzstelle zu liegen kommt.

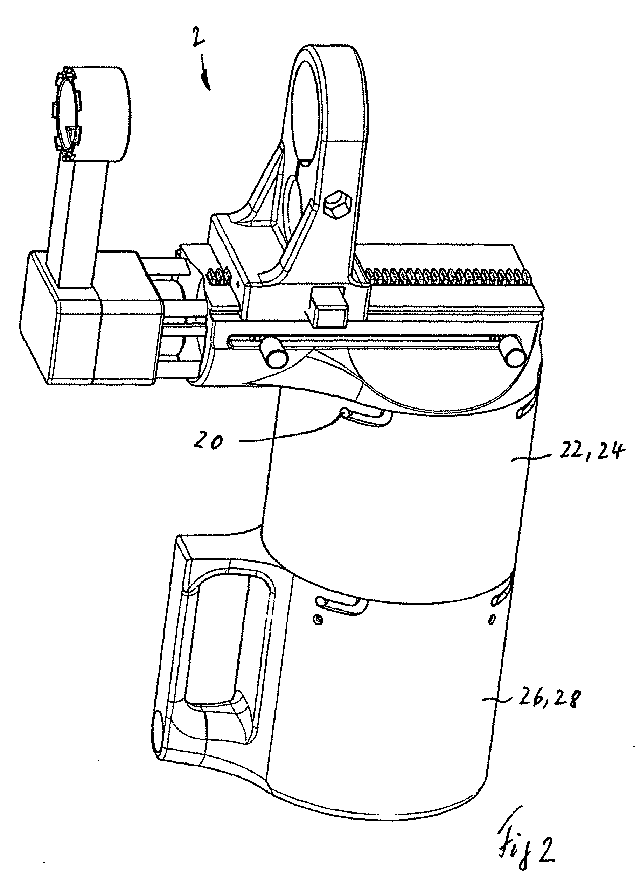

An die bislang beschriebenen Komponenten der Absaugeinrichtung 2 ist, wie aus Figur 2 ersichtlich, über bajonettverschlussartig wirkende Befestigungselemente 20 ein Gehäusekörper 22 eines weiteren Moduls 24, welches einen Staubaufnahmebehälter bildet, anschließbar. An dieses Modul 24 ist ein Gehäusekörper 26 eines weiteren Moduls 28 anschließbar, welcher eine Unterdruck erzeugende Vorrichtung umfasst. Bei Erzeugung von Unterdruck stellt sich ein Saugluftstrom ein, der im Bereich der Werkzeugansetzstelle zwischen der zu bearbeitenden Oberfläche und der Staubableitvorrichtung 12 in den Ansaugraum 18 eintritt und von dort über eine Saugluftstromführung durch den Gehäusekörper 6 hindurch in den Gehäusekörper 22 des Moduls 24 geführt wird.

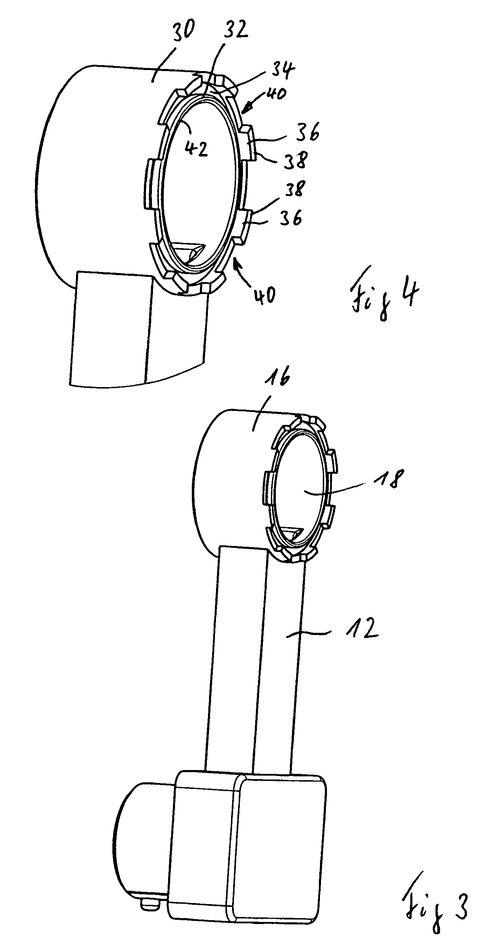

Der Anlagebereich der Staubableitvorrichtung 12 ist wie im Einzelnen in den Figuren 3 und 4 dargestellt ausgebildet. Die Gehäusewandung 16 umfasst eine Außenwandung 30 und eine Innenwandung 32, zwischen denen ein spaltförmiger Zwischenraum 34 von einigen mm Tiefe in Längsrichtung zumindest im Bereich der Anlageseite an die zu bearbeitende Oberfläche ausgebildet ist. Der Zwischenraum 34 kann sich in Längsrichtung 8 auch weiter erstrecken. Er kann sich insbesondere bis auf die von der Anlageseite abgewandte Seite erstrecken. Dies ist aber nicht erforderlich. Man erkennt des Weiteren, dass an der Außenwandung 30 in Umfangsrichtung verteilte und voneinander beabstandete Vorsprünge 36 vorgesehen sind, mit deren Stirnseite 38 die Außenwandung 30 gegen die zu bearbeitende Oberfläche anlegbar ist. Die jeweiligen Stirnseiten 38 liegen daher vorzugsweise in einer Ebene. Zwischen den Vorsprüngen 38 werden Lufteinströmöffnungen 40 gebildet, durch die sich ein Saugluftstrom einstellen kann, der zwischen der zu bearbeitenden Oberfläche und der Staubableitvorrichtung 12 im Wesentlichen in radialer Richtung in den Ansaugraum 18 einströmen kann. Die Innenwandung 32 ist mit ihrer Stirnseite 42 geringfügig in axialer Richtung 8 hinter die Stirnseite 38 der Vorsprünge 36 zurückgesetzt. Die Zurücksetzung ist jedoch in Längsrichtung 8 geringer als die Erstreckung der Vorsprünge 36 bzw. der Einströmöffnungen 40 zwischen ihnen in der Längsrichtung 8. Wenn die Absaugeinrichtung 2 mit ihrer Staubableitvorrichtung 12 gegen eine zu bearbeitende Oberfläche angelegt wird, so stellt sich ein Saugluftstrom zwischen der zu bearbeitenden Oberfläche und der Staubableitvorrichtung 12 ein, der zunächst radial nach innen gerichtet wenigstens teilweise auf die in Längsrichtung 8 geringfügig zurückgesetzte Innenwandung 32 auftrifft. Es findet unterstützt durch den Zwischenraum zwischen Außenwandung 30 und Innenwandung 32 eine Vergleichmäßigung der Saugluftströmung in den Ansaugraum 18 statt. Der Saugluftstrom tritt (über die Umfangsrichtung) im Wesentlichen gleichmäßig in radialer Richtung in den Ansaugraum 18 ein, was zu einer optimalen Mitnahme von im Zuge der Bearbeitung entstehendem Schmutz, insbesondere Bohrstaub, führt.

## Patentansprüche

1. Absaugeinrichtung (2) für ein Elektrohandwerkzeuggerät, mit einer gegen eine zu bearbeitende Oberfläche im Bereich einer Werkzeugansetzstelle anlegbaren Staubableitvorrichtung (12), die einen die Werkzeugansetzstelle mit einer Gehäusewandung (16) umgebenden Ansaugraum (18) aufweist, wobei ein vorderer Stirnbereich über in axialer Richtung erstreckte Vorsprünge gegen die zu bearbeitende Oberfläche anlegbar ist, **dadurch gekennzeichnet, dass** die Gehäusewandung (16) eine Außenwandung (30) und eine Innenwandung (32) aufweist, zwischen denen ein spaltförmiger Zwischenraum (34) ausgebildet ist, und dass die Außenwandung (30) über in axialer Richtung (8) erstreckte Vorsprünge (36) gegen die zu bearbeitende Oberfläche anlegbar ist, und dass eine Stirnseite der Innenwandung (32) gegenüber einer Stirnseite (38) der Vorsprünge (36) zurückgesetzt ist.

2. Absaugeinrichtung nach Anspruch 1, **dadurch gekennzeichnet, dass** die Vorsprünge (36) **dadurch** gebildet sind, dass an der Stirnseite der Außenwandung (30) in Umfangsrichtung erstreckte Ausnehmungen (40) vorgesehen sind.

3. Absaugeinrichtung nach Anspruch 1 oder 2, **dadurch gekennzeichnet, dass** die Innenwandung (32) um eine Entfernung zurückgesetzt ist, die geringer ist als die axiale Erstreckung der Vorsprünge (36).

4. Absaugeinrichtung nach Anspruch 1, 2 oder 3, **dadurch gekennzeichnet, dass** die Innenwandung (32) derart geringfügig zurückgesetzt ist, dass die von außen nach innen betrachtete Querschnittsfläche des Spalts zwischen Innenwandung (32) und zu bearbeitender Oberfläche geringer ist als die von außen nach innen betrachtete lichte Querschnittsfläche zwischen den Vorsprüngen (36).

5. Absaugeinrichtung nach einem der vorstehenden Ansprüche, **dadurch gekennzeichnet, dass** die Gehäusewandung (16), welche den Ansaugraum (18) begrenzt zylindrisch ist.

## Claims

1. Suction device (2) for a hand-held power tool comprising a dust removal mechanism (12) which may be positioned against a surface to be machined in the region of a tool application point and has a suction chamber (18) surrounding the tool application point with a housing wall (16), it being possible to position a front end region against the surface to be machined via projections extending in an axial direction, **characterised in that** the housing wall (16) has an outer wall (30) and an inner wall (32), between which a gap (34) is formed, and **in that** the outer wall (30) may be positioned against the surface to be machined via projections (36) extending in an axial direction (8), and **in that** an end face of the inner wall (32) is set back with respect to an end face (38) of the projections (36).

2. Suction device according to claim 1, **characterised in that** the projections (36) are formed **in that** recesses (40) are provided which extend in a circumferential direction on the end face of the outer wall (30).

3. Suction device according to either claim 1 or claim 2, **characterised in that** the inner wall (32) is set back by a distance which is less than the axial extent of the projections (36).

4. Suction device according to claim 1, 2 or 3, **characterised in that** the inner wall (32) is set back to a slight extent such that the cross-sectional surface of the gap, seen from outside inward, between inner wall (32) and surface to be machined is smaller than the clear cross-sectional surface, seen from outside inward, between the projections (36).

5. Suction device according to any one of the preceding claims, **characterised in that** the housing wall (16) defining the suction chamber (18) is cylindrical.

## Revendications

1. Dispositif d'aspiration (2) pour un outillage à main électrique, avec un dispositif d'évacuation de la poussière (12), pouvant être appliqué contre une surface à usiner dans la zone d'un emplacement de fixation de l'outil, qui comporte un espace d'aspiration (18) entourant l'emplacement de fixation de l'outil par une paroi de carter (16), la zone frontale avant pouvant être appliquée contre la surface à usiner par des tenons développés dans le sens axial, **caractérisé en ce que** la paroi de carter (16) comprend une paroi extérieure (30) et une paroi intérieure (32), entre lesquelles est formé un espace (34) en forme de fente et **en ce que** la paroi extérieure (30) peut s'appliquer contre la surface à usiner au moyen de tenons (36) s'étendant dans le sens axial (8) et **en ce qu'**une face frontale de la paroi intérieure (32) est en retrait par rapport à une face frontale (38) des tenons (36).

2. Dispositif d'aspiration selon la revendication 1, **caractérisé en ce que** les tenons (36) sont formés du fait que des évidements (40) s'étendant dans le sens circonférentiel sont prévus sur la face frontale de la paroi extérieure (30).

3. Dispositif d'aspiration selon l'une quelconque des revendications 1 ou 2, **caractérisé en ce que** la paroi intérieure (32) est en retrait d'une distance plus petite que le développement axial des tenons (36).

4. Dispositif d'aspiration selon l'une quelconque des revendications 1, 2 ou 3, **caractérisé en ce que** la paroi intérieure (32) est légèrement en retrait de telle sorte que l'aire de section, considérée de l'extérieur vers l'intérieur, de la fente entre la paroi intérieure (32) et la surface à usiner est plus petite que l'aire de section de passage entre les tenons (36), considérée de l'extérieur vers l'intérieur.

5. Dispositif d'aspiration selon l'une quelconque des revendications précédentes, **caractérisé en ce que** la paroi de carter (16), qui limite l'espace d'aspiration (18), est cylindrique.
